# EUROPEAN PATENT APPLICATION

(11) **EP 3 260 676 A1**
(43) Date of publication of application: **27.12.2017**
(21) Application number: 16752263.0
(22) Date of filing: 01.02.2016
(51) Int. Cl.: F01N 3/20, B01D 53/94, B01D 53/96, F01N 3/08

(54) **EXHAUST GAS PURIFICATION SYSTEM FOR INTERNAL COMBUSTION ENGINE, INTERNAL COMBUSTION ENGINE, AND EXHAUST GAS PURIFICATION METHOD FOR INTERNAL COMBUSTION ENGINE**

(30) Priority: 16.02.2015 JP 2015027555
(71) Applicant: Isuzu Motors, Ltd., Shinagawa-Ku Tokyo 140-8722 (JP)
(72) Inventor: NAGAOKA, Daiji, Fujisawa-shi Kanagawa 252-0881 (JP)
(74) Representative: Miller Sturt Kenyon
(86) International application number: PCT/JP2016/052908
(87) International publication number: WO 2016/132875

(57) **Abstract**

There is provided an exhaust gas purification system 20 for an internal combustion engine including a lean NOx trap catalyst device 24 which is provided on an exhaust passage 15 of the internal combustion engine 10, wherein a control unit 40 for controlling the exhaust gas purification system 20 sets a desulfurization temperature Tt which is a target temperature in executing a desulfurization control on the lean NOx trap catalyst device 24 so as to correspond to an sulfur accumulation amount Sa in the lean NOx trap catalyst device 24. When executing a desulfurization control on the lean NOx trap catalyst device which is provided on the exhaust gas system of the internal combustion engine, the desulfurization control with superior robustness is executed in which the desulfurization process is executed in an ensured fashion while suppressing the lean NOx trap catalyst device from being thermally deteriorated or fused, whereby the exhaust gas purification system for an internal combustion engine, the internal combustion engine and the exhaust gas purification method for an internal combustion engine which can maintain the NOx purification factor high are provided.

## Description

### Technical Field

The present invention relates to an exhaust gas purification system for an internal combustion engine, an internal combustion engine, and an exhaust gas purification method for an internal combustion engine and more particularly to an exhaust gas purification system for an internal combustion engine, an internal combustion engine and an exhaust gas purification method for an internal combustion engine which can execute a desulfurization process in an ensured fashion while preventing a lean NOx trap catalyst device from being thermally deteriorated or fused.

### Background Art

In general, to purify such purification target constituents as hydrocarbons (HC), carbon monoxides (CO), nitrogen oxides and suspended particulate matters (PM) which are contained in exhaust gas discharged from an internal combustion engine such as a diesel engine, an exhaust gas purification system is used which includes an exhaust gas purification apparatus having various of catalyst devices such as a diesel oxidation catalyst (DOC) device, a catalyzed soot filter (CSF, SCRF or the like) device, a selective catalytic reduction (SCR) device, a lean NOx trap catalyst (LNT) device and the like.

In an exhaust gas purification system in which a lean NOx trap (LNT) catalyst device is provided on an exhaust passage to purify oxides of nitrogen (NOx) contained in exhaust gas, when a lean state exists where excessive oxygen is contained in exhaust gas as in lean burning or in a diesel engine, NOx is temporarily occluded in the lean NOx trap catalyst device. Then, when an amount of occluded NOx is increased to such an extent that no more NOx can be occluded, increasing an amount of NOx slipping to a downstream side, a rich control is executed periodically in which the air-fuel ratio of exhaust gas is shifted to a rich side, so that NOx occluded in the lean NOx trap catalyst device is discharged and reduced. In this mechanism, the occluding and reducing operations are repeated to maintain the NOx purification factor by the lean NOx trap catalyst device.

It is known that this lean NOx trap catalyst device occludes sulfur (S), which is one of the constituents of fuel and engine oil and which is contained in exhaust gas, as it does NOx, thereby causing a sulfur poisoning problem that the NOx occlusion capacity is reduced. To cope with this problem, a desulfurization control (an S purge control) is executed periodically in which exhaust gas is heated to a high temperature of the order of 600°C and the air-fuel ratio of exhaust gas is shifted to a rich atmosphere, so that the sulfur occluded in the lean NOx trap catalyst device is released in the high-temperature and rich atmosphere.

The desulfurization control in the lean NOx trap catalyst device is such that the desulfurization efficiency is increases as the temperature of exhaust gas increases and the excess air factor (λ) decreases, which causes fears that the lean NOx trap catalyst device is thermally deteriorated or fused. Consequently, normally, the desulfurization control is executed under such a desulfurizing condition that a best purification factor of NOx contained in exhaust gas can be maintained by balancing a suppression of the thermal deterioration or fusing and the recovery of sulfur poisoning of the lean NOx trap catalyst device.

In relation to this, as described in JP-A-2010-144557 of Japanese Patent Application, an exhaust gas purification system and an exhaust gas purification method for an internal combustion engine are proposed in which a desulfurization control of a NOx storage reduction catalyst and a PM regeneration process of a DPF or a DPF with a catalyst are carried out simultaneously and in parallel by maintaining a PM regeneration temperature at an appropriate temperature by suppressing a flow rate of exhaust gas that passes through the NOx storage reduction catalyst to flow into the DPF or the DPF with a catalyst.

However, since the desulfurization control of the lean NOx trap catalyst device needs a certain length of time, in a case where a state where an engine operates goes out of an operation zone where the desulfurization control can be executed or the engine is stopped in the midst of execution of the desulfurization control, the desulfurization control is suspended or interrupted. Normally, in this desulfurization control, it is necessary to increase the temperature of exhaust gas to a high temperature, and therefore, the desulfurization control is executed at the same time that the PM regeneration control is executed on many occasions. Thus, when the desulfurization control is suspended or interrupted, the desulfurization control is put off until the next PM regeneration control is executed.

As this occurs, a sulfur accumulation amount becomes greater than that resulting when the desulfurization control is completed. Thus, even in the event that the next desulfurization control is executed, it is not possible to desulfurize sufficiently the accumulated sulfur. Then, since a NOx purification is executed with a NOx occlusion capacity reduced by an amount corresponding to the remaining amount of sulfur, there are caused fears that the NOx purification factor is reduced.

For example, in the event that a desulfurization control fails from the beginning where the desulfurization control is executed at Tx °C every X mg at which a highest purification factor can be maintained, sulfur accumulates to Y mg (> X mg) until the next desulfurization control starts. Thus, even in the event the next desulfurization control is completed, all the accumulated sulfur cannot be desulfurized, whereby sulfur remains, reducing the NOx purification factor.

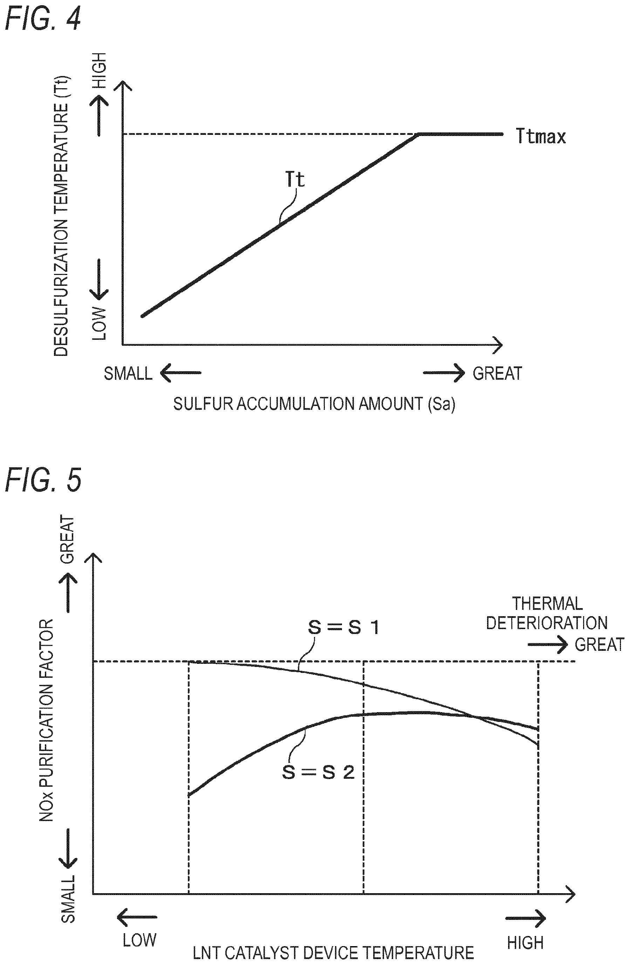

Fig. 5 shows schematically a relation between LNT catalyst temperature and NOx purification factor with a sulfur accumulation amount (a sulfur remaining amount) being X mg (S=S1) and (Y=2×X) mg (S=S2). As shown in Fig. 5, in S=S2 where a sulfur accumulation amount is greater than S=S1, NOx is reduced remarkably in a range where the LNT catalyst temperature is low. On the other hand, NOx is reversed to be increased in a range where the LNT catalyst temperature is high. However, since the LNT catalyst temperature is high, the thermal deterioration of the catalyst is progressed.

### Prior Art Literature

### Patent Literature

Patent Literature 1: JP-A-2010-144557 of Japanese Patent Application

### Summary of the Invention

According to the knowledge that the inventor of the invention applied for patent has obtained, when executing a desulfurization control on a lean NOx trap catalyst device provided in an exhaust gas system of an internal combustion engine, a sulfur desulfurization amount becomes great as a desulfurization temperature increases during the desulfurization control. Due to this, the desulfurization temperature is set so as to correspond to a sulfur accumulation amount by reflecting thereto the result of a decision made on whether or not the previous desulfurization control is suspended or interrupted by calculating a sulfur accumulation amount every time the desulfurization control is executed. By doing so, even in the event that the desulfurization control is suspended or interrupted to increase the sulfur accumulation amount, the desulfurization process can be executed in an ensured fashion, thereby making it possible to suppress a reduction in NOx purification factor that is caused by sulfur poisoning. Moreover, when the sulfur accumulation amount is small, since the desulfurization temperature can be reduced, the thermal deterioration of the catalyst can also be suppressed.

The present invention has been made in view of the situations described above, and an object thereof is to provide an exhaust gas purification system for an internal combustion engine, an internal combustion engine, and a exhaust gas purification method for an internal combustion engine which can execute a desulfurization control with superior robustness in which when a desulfurization control is executed on a lean NOx trap catalyst device which is provided in an exhaust gas system of an internal combustion engine, the desulfurization process can be executed in an ensured fashion while suppressing the lean NOx trap catalyst device from being thermally deteriorated or fused, whereby a high NOx purification factor can be maintained.

With a view to achieving the object, according to the invention, there is provided an exhaust gas purification system for an internal combustion engine including a lean NOx trap catalyst device which is provided on an exhaust passage of the internal combustion engine, characterized in that
a control unit for controlling the exhaust gas purification system sets a desulfurization temperature so as to correspond to a sulfur accumulation amount in the lean NOx trap catalyst device, the desulfurization temperature being a target temperature in executing a desulfurization control on the lean NOx trap catalyst device.

According to the configuration described above, when the desulfurization control is executed on the lean NOx trap catalyst device, the desulfurization control with superior robustness can be executed by calculating the sulfur accumulation amount in the lean NOx trap catalyst device in consideration of whether or not the previous desulfurization control is suspended due to the internal combustion engine being stopped and setting the desulfurization temperature according to the calculated sulfur accumulation amount, whereby the desulfurization process can be executed in an ensured fashion while suppressing the lean NOx trap catalyst device from being thermally deteriorated or fused, thereby making it possible to maintain a high NOx purification factor.

In the exhaust gas purification system for the internal combustion engine, in a case where the control unit includes sulfur occlusion amount calculation means for calculating a sulfur occlusion amount by adding a sulfur amount that flows into to be occluded in the lean NOx trap catalyst device when the internal combustion engine operates normally, sulfur desulfurization amount calculation means for calculating a sulfur reduction amount by adding a sulfur amount that is desulfurized from the lean NOx trap catalyst device when the desulfurization control is executed, sulfur accumulation amount calculation means for calculating the sulfur accumulation amount by subtracting the sulfur reduction amount calculated by the sulfur desulfurization amount calculation means from the sulfur occlusion amount calculated by the sulfur occlusion amount calculation means, desulfurization temperature calculation means for calculating a desulfurization temperature, when the desulfurization control is executed, from the sulfur accumulation amount calculated by the sulfur accumulation amount calculation means based on a database indicating a relation between the sulfur accumulation amount and the desulfurization temperature which is the target temperature when the desulfurization control is executed, and desulfurization control execution means for controlling an exhaust gas temperature so as to increase so that the exhaust gas temperature reaches the desulfurization temperature calculated by the desulfurization temperature calculation means, it is possible to set the desulfurization temperature while calculating the amount of accumulation of sulfur in the lean NOx trap catalyst device.

When referred to herein, the normal operation of the internal combustion engine means an operation of the engine (including a stopped state) that is performed when the desulfurization control for recovering the sulfur poisoning of the lean NOx trap catalyst device and the NOx regeneration control for recovering the NOx occlusion capability of the lean NOx trap catalyst device are not executed.

With a view to achieving the object described above, according to the present invention, there is provided an internal combustion engine including the exhaust gas purification system described above, and with this internal combustion engine, it is possible to provide the same working effect as that provided by the exhaust gas purification system for an internal combustion engine described above.

With a view to achieving the object described above, according to the present invention, there is provided an exhaust gas purification method for an internal combustion engine including a lean NOx trap catalyst device which is provided on an exhaust passage of the internal combustion engine designed to achieve the object described above is a method characterized in that a desulfurization temperature is set so as to correspond to a sulfur accumulation amount in the lean NOx trap catalyst device, the desulfurization temperature being a target temperature in executing a desulfurization control on the lean NOx trap catalyst device.

The exhaust gas purification method for the internal combustion engine described above includes a sulfur occlusion amount calculation step of calculating a sulfur occlusion amount by adding a sulfur amount that flows into to be occluded in the lean NOx trap catalyst device when the internal combustion engine operates normally, a sulfur desulfurization amount calculation step of calculating a sulfur reduction amount by adding a sulfur amount that is desulfurized from the lean NOx trap catalyst device when the desulfurization control is executed, a sulfur accumulation amount calculation step of calculating the sulfur accumulation amount by subtracting the sulfur reduction amount calculated in the sulfur desulfurization amount calculation step from the sulfur occlusion amount calculated in the sulfur occlusion amount calculation step, a desulfurization temperature calculation step of calculating a desulfurization temperature, when the desulfurization control is executed, from the sulfur accumulation amount calculated in the sulfur accumulation amount calculation step based on a database indicating a relation between the sulfur accumulation amount and the desulfurization temperature which is the target temperature when the desulfurization control is executed, and a desulfurization control execution step of controlling an exhaust gas temperature so as to increase so that the exhaust gas temperature reaches the desulfurization temperature calculated in the desulfurization temperature calculation step.

According to this method, it is possible to provide the same working effect as that provided by the exhaust gas purification system for an internal combustion engine described above.

### Advantageous Effect of the Invention

According to the exhaust gas purification system for an internal combustion engine, the internal combustion engine, and the exhaust gas purification method for an internal combustion engine of the present invention, when the desulfurization control is executed on the lean NOx trap catalyst device, the sulfur accumulation amount in the lean NOx trap catalyst device is calculated in consideration of whether or not the previous desulfurization control is suspended due to the internal combustion engine being stopped and the desulfurization temperature is set according to the calculated sulfur accumulation amount, and therefore, the desulfurization control with superior robustness can be executed in which the desulfurization process can be executed in an ensured fashion while suppressing the lean NOx trap catalyst device from being thermally deteriorated or fused, thereby making it possible to maintain a high NOx purification factor.

### Brief Description of Drawings

[Fig. 1] Fig. 1 is a diagram showing schematically the configuration of an internal combustion engine including an exhaust gas purification system for an internal combustion engine according to an embodiment of the present invention.
[Fig. 2] Fig. 2 is a drawing showing the configuration of a control unit.

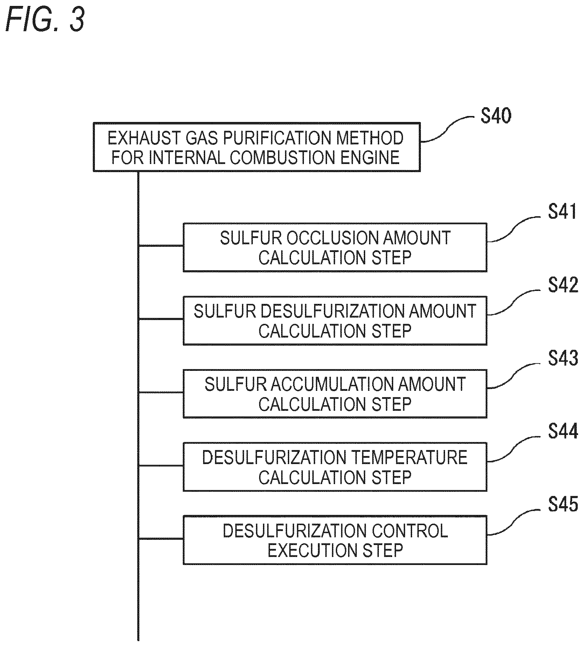

[Fig. 3] Fig. 3 is a drawing showing control steps of an exhaust gas purification method for an internal combustion engine according to the embodiment of the present invention.
[Fig. 4] Fig. 4 is a drawing showing schematically a relation between sulfur accumulation amount and desulfurization temperature.
[Fig. 5] Fig. 5 is a drawing showing schematically a relation between lean NOx trap catalyst device temperature and NOx purification factor which corresponds to a difference in sulfur accumulation amount of a lean NOx trap catalyst device.

### Mode for Carrying out the Invention

Hereinafter, referring to the drawings, an exhaust gas purification system for an internal combustion engine, an internal combustion engine and an exhaust gas purification method for an internal combustion engine according to the embodiment of the present invention will be described. An internal combustion engine according to the embodiment of the present invention includes an exhaust gas purification system for an internal combustion engine according to the embodiment of the present invention and can provide the same working effect as that provided by an exhaust gas purification system for an internal combustion engine which will be described later.

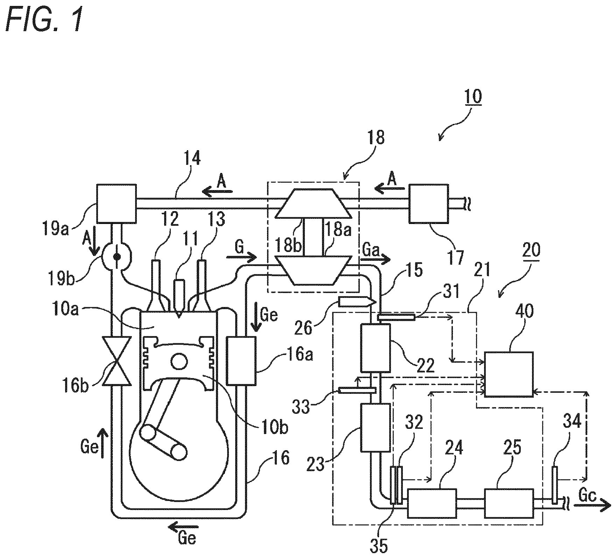

Firstly, referring to Fig. 1, an internal combustion engine (hereinafter, referred to as an engine) 10 and an exhaust gas purification system 20 for the internal combustion engine according to the embodiment of the present invention will be described. A fuel injector 11, an intake valve 12 and an exhaust valve 13 are provided on this engine 10 so as to face a cylinder 10a, and further, an intake passage 14 communicating with the intake valve 12, an exhaust passage 15 communicating with the exhaust valve 13 and an EGR passage 16 are provided.

An air cleaner 17, a compressor 18b of a turbocharger (a turbo-type super charging device) 18, an inter-cooler 19a, and an intake throttle valve 19b are provided sequentially in that order from an upstream side along the intake passage 14. Additionally, a turbine 18a of the turbocharger 18 and an exhaust gas purification device 21 are provided sequentially in that order from an upstream side along the exhaust passage 15. The EGR passage 16 is provided so as to connect a portion of the intake passage 14 which lies downstream of the compressor 18b and a portion of the exhaust passage 15 which lies upstream of the turbine 18a, and an EGR cooler 16a and an EGR valve 16b are provided sequentially in that order from an upstream side along the EGR passage 16.

Then, fresh air A introduced from the atmosphere is sent into the cylinder 10a as required by way of the intake valve 12 together with exhaust gas (EGR gas) Ge which flows into the intake passage 14 from the EGR passage 16. Exhaust gas G generated in the cylinder 10a flows out into the exhaust passage 15 by way of the exhaust valve 13, and part of the exhaust gas G flows into the EGR passage 16 as EGR gas Ge, while the remaining exhaust gas Ga (=G-Ge) flows into the exhaust gas purification device 21 by way of the turbine 18a. After it has been purified, the exhaust gas Ga is discharged to the atmosphere by way of a muffler (not shown) and a tail pipe (not shown) as purified exhaust gas Gc.

In the configuration shown in Fig. 1, the exhaust gas purification device 21 of the exhaust gas purification system 20 includes catalyst devices such as a diesel oxidation catalyst (DOC) device 22, a catalyzed soot filter (CSF) device 23, a lean NOx trap catalyst (LNT) device 24, a rear-stage diesel oxidation catalyst (DOC) device 25 and the like. There may be cases where the arranging order of the catalyzed soot filter device 23 and the lean NOx trap catalyst device 24 is reversed, so that the exhaust gas purification device 21 includes various of the catalyst devices in such a way that the diesel oxidation catalyst device 22, the lean NOx trap catalyst device 24, the catalyzed soot filter device 23 and the rear-stage diesel oxidation catalyst device 25 are arranged sequentially in that order.

A fuel injection device 26 for injecting unburned fuel into the exhaust passage 15 is provided on a portion of the exhaust passage 15 which lies upstream of the diesel oxidation catalyst device 22, and unburned fuel is injected into the exhaust passage 15 when exhaust gas temperature increasing controls are executed which include a NOx regeneration control executed on the lean NOx trap catalyst device 24, a sulfur purge control executed on the diesel oxidation catalyst device 22 and the lean NOx trap catalyst device 24 and a PM regeneration control executed on the catalyzed soot filter device 23. By injecting unburned fuel in the way described above, hydrocarbons which are unburned fuel are oxidized by the diesel oxidation catalyst device 22 to thereby increase the temperature of exhaust gas Ga using heat generated by the oxidation of hydrocarbons. The temperature of the lean NOx trap catalyst device 24 is increased to a temperature zone where occluded NOx is released and reduced, the temperature of the catalyzed soot filter device 23 is increased to a temperature zone where PM can be burned or the temperatures of the diesel oxidation catalyst device 22 and the lean NOx trap catalyst device 24 are increased to a temperature zone where sulfur can be desulfurized by increasing the temperature of exhaust gas Ga or increasing the temperatures of the catalyst devices 22, 23, 24 through combustion of hydrocarbons therein. This allows the catalyst devices 22, 23, 24 to recover their exhaust purification capabilities.

A first temperature sensor 31 for detecting a temperature of exhaust gas Ga which flows into the diesel oxidation catalyst device 22 is disposed at a portion of the exhaust passage 15 which lies at an upstream side (an inlet side) of the diesel oxidation catalyst device 22, and a second temperature sensor 32 for detecting a temperature of exhaust gas Ga which flows into the lean NOx trap catalyst device 24 is disposed at a portion of the exhaust passage 15 which lies at an upstream side of the lean NOx trap catalyst device 24. Additionally, a third temperature sensor 33 for detecting a temperature of exhaust gas Ga which flows out of the diesel oxidation catalyst device 22 into the catalyzed soot filter device 23 at a portion of the exhaust passage 15 which lies between the diesel oxidation catalyst device 22 and the catalyzed soot filter device 23.

When executing a desulfurization control on the lean NOx trap catalyst device 24 by controlling the temperature of exhaust gas Ga so as to increase, as a detection temperature which constitutes a control target which is controlled so as to become a desulfurization temperature which constitutes a control target in controlling the temperature of exhaust gas Ga to increase, it is normal to use a temperature which is detected by the second temperature sensor 32. However, a temperature sensor (not shown) may be provided downstream of the lean NOx trap catalyst device 24, so that a temperature which is detected by this temperature sensor may be used as the detection temperature. Alternatively, a temperature which takes an average value between the temperature detected by this sensor and the temperature detected by the second temperature sensor 32 may be used as the detection temperature.

Further, a λ sensor 34 for measuring an air excess air factor λ or an oxygen concentration of exhaust gas Ga or an oxygen concentration sensor (not show) is disposed downstream of the exhaust gas purification device 21. This λ sensor or the oxygen concentration sensor may be disposed upstream of the exhaust gas purification device 21 or on an exhaust manifold.

A NOx concentration sensor 35 for detecting a NOx concentration D of exhaust gas Ga which flows into the lean NOx trap catalyst device 24 is provided at a portion of the exhaust passage 15 which lies upstream of the lean NOx trap catalyst device 24. In a case where a NOx concentration D of exhaust gas Ga which flows into the lean NOx trap catalyst device 24 can be estimated by anyone of the conventional methods, this NOx concentration sensor 35 does not necessarily have to be disposed.

Additionally, a control unit 40 is provided for controlling the exhaust gas purification system 20 for an internal combustion engine of the present invention. Normally, the control unit 40 is incorporated in an engine control unit (ECU) for controlling the overall operating state of the engine 10. However, the control unit 40 may be provided independently.

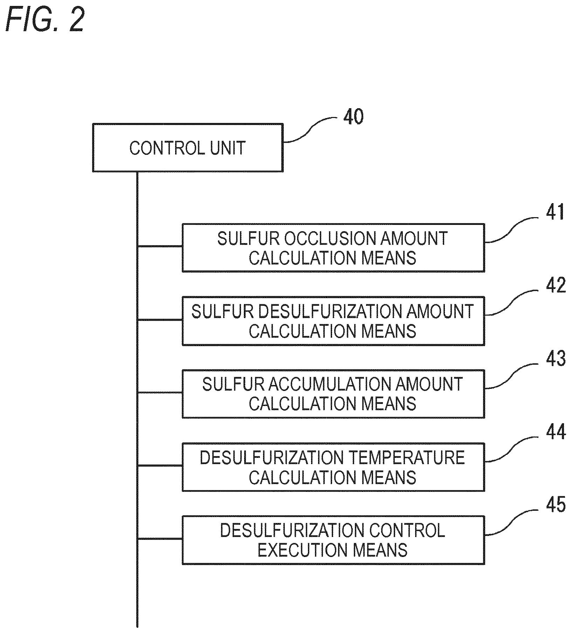

In the exhaust gas purification system 20 for an internal combustion engine according to the embodiment of the present invention, the control unit 40 for controlling the exhaust gas purification system 20 includes, as shown in Fig. 2, sulfur occlusion amount calculation means 41, sulfur desulfurization amount calculation means 42, sulfur accumulation amount calculation means 43, desulfurization temperature calculation means 44, and desulfurization control execution means 45.

The sulfur occlusion amount calculation means 41 is a means for calculating a sulfur occlusion amount ΣSo by adding a sulfur amount So which flows into to be occluded in the lean NOx trap catalyst device 24 when the engine 10 is operating normally. When referred to herein, the normal operation of the engine 10 means an operation of the engine 10 (including a stopped state) which is performed when a desulfurization control for recovering the sulfur poisoning of the lean NOx trap catalyst device 24 and a NOx regeneration control for recovering the NOx occlusion capability of the lean NOx trap catalyst device are not executed.

The sulfur desulfurization amount calculation means 42 is a means for calculating a sulfur reduction amount ΣSd by adding a sulfur amount Sd which is released from the lean NOx trap catalyst device 24 when a desulfurization control is executed. The sulfur accumulation amount calculation means 43 is a means for calculating a sulfur accumulation amount Sa by subtracting the sulfur reduction amount ΣSd calculated by the sulfur desulfurization amount calculation means 42 from the sulfur occlusion amount ΣSo calculated by the sulfur occlusion amount calculation means 41.

Then, the desulfurization temperature calculation means 44, which constitutes a gist of the present invention, is a means for calculating a desulfurization temperature Tt when a desulfurization control is executed from the sulfur accumulation amount Sa calculated by the sulfur accumulation amount calculation means 43 based on a database indicating a relation between the sulfur accumulation amount Sa and the desulfurization temperature Tt which constitutes a target temperature when a desulfurization control is executed.

A relation between the sulfur accumulation amount Sa and the desulfurization temperature Tt is set in advance based on the results of experiments and is stored in the control unit 40 in the form of a controlling data map. The relation between the sulfur accumulation amount Sa and the desulfurization temperature Tt is, for example, something like a relation shown in Fig. 4, in which the desulfurization temperature is low when the sulfur accumulation amount Sa is small, whereas the desulfurization temperature Tt becomes high when the sulfur accumulation amount Sa is great.

Since there is a limit to a temperature to which the temperature is increased from the viewpoint of the heat resistance of the lean NOx trap catalyst device, an upper limit value Ttmax (for example, 650°C to 700°C) determined in consideration of the heat resistance is provided on the desulfurization temperature Tt used when a desulfurization control is executed.

Then, the desulfurization control execution means 45 is a means for controlling the temperature of exhaust gas so as to increase so that the temperature of exhaust gas Ga reaches the desulfurization temperature Tt calculated by the desulfurization temperature calculation means 44. The well-known method is used as this desulfurization control.

By the configuration that has been described heretofore, in the present invention, the control unit 40 sets a desulfurization temperature Tt which constitutes a target temperature when a desulfurization control is executed on the lean NOx trap catalyst device 24 so as to correspond to the sulfur accumulation amount Sa accumulated in the lean NOx trap catalyst device 24.

Next, an exhaust gas purification method S40 for an internal combustion engine according to the embodiment of the present invention includes, as shown in Fig. 2, a sulfur occlusion amount calculation step S41, a sulfur desulfurization amount calculation step S42, a sulfur accumulation amount calculation step S43, a desulfurization temperature calculation step S44 and a desulfurization control execution step S45.

The sulfur occlusion amount calculation step S41 is a step of calculating a sulfur occlusion amount ΣSo by adding a sulfur amount So which flows into to be occluded in the lean NOx trap catalyst device 24 when the engine 10 is operating normally. The sulfur desulfurization amount calculation step S42 is a step of calculating a sulfur reduction amount ΣSd by adding a sulfur amount Sd which is released from the lean NOx trap catalyst device 24 when a desulfurization control is executed. The sulfur accumulation amount calculation step S43 is a step of calculating a sulfur accumulation amount Sa by subtracting the sulfur reduction amount ΣSd calculated in the sulfur desulfurization amount calculation step S42 from the sulfur occlusion amount ΣSo calculated in the sulfur occlusion amount calculation step S41.

The desulfurization temperature calculation step S44 is a step of calculating a desulfurization temperature Tt when a desulfurization control is executed from the sulfur accumulation amount Sa calculated in the sulfur accumulation amount calculation step S43 based on a database indicating a relation between the sulfur accumulation amount Sa and the desulfurization temperature Tt which constitutes a target temperature when a desulfurization control is executed. The desulfurization control execution step S45 is a step of controlling the temperature of exhaust gas so as to increase so that the temperature of exhaust gas Ga reaches the desulfurization temperature Tt calculated in the desulfurization temperature calculation step S44. The well-known method is used as this desulfurization control.

By the configuration of the method described above, the exhaust gas purification method S40 for an internal combustion engine of the present invention constitutes a method for setting the desulfurization temperature Tt which becomes the target temperature in executing the desulfurization control on the lean NOx trap catalyst device 24 so as to correspond to the sulfur accumulation amount Sa accumulated in the lean NOx trap catalyst device 24.

In the exhaust gas purification system 20 for an internal combustion engine and the exhaust gas purification method S40 for an internal combustion engine described above, in executing the desulfurization control on the lean NOx trap catalyst device 24, the sulfur accumulation amount Sa is calculated at the start of the desulfurization control, and the desulfurization temperature Tt which is determined according to the sulfur accumulation amount Sa is used as the target temperature. Then, the rich control including the exhaust gas temperature increasing control in which the detection temperature of exhaust gas becomes this desulfurization temperature Tt is executed for a preset length of time to execute the desulfurization process.

Due to this, when the previous desulfurization control is suspended or interrupted because the operating state of the engine 10 changes, since the desulfurization control is not completed, the sulfur accumulation amount Sa increases. In addition to the reason described above, also when the desulfurization is suppressed as a result of the exhaust gas temperature being lowered due to the operating state of the engine 10 in the previous desulfurization control, the sulfur reduction amount resulting from the release of sulfur is reduced, increasing the sulfur accumulation amount Sa. In this case, since the desulfurization temperature Tt is set high for the next desulfurization control, the desulfurization is promoted, and this increases the sulfur reduction amount resulting from the release of sulfur and reduces the sulfur accumulation amount Sa.

On the other hand, in a case where the desulfurization is promoted as a result of the exhaust gas temperature being increased due to the operating state of the engine in the previous desulfurization control, the sulfur reduction amount resulting from the release of sulfur is increased, reducing the sulfur accumulation amount Sa. In this case, since the desulfurization temperature Tt is set low for the next desulfurization control, the desulfurization is promoted less, and this decreases the sulfur reduction amount resulting from the release of sulfur. However, since the sulfur accumulation amount Sa is small originally, it is possible to allow the sulfur accumulation amount Sa after desulfurization to stay at a target value. Then, in this desulfurization control, since the desulfurization temperature Tt is low, it is possible to reduce the thermal deterioration of the catalyst of the lean NOx trap catalyst device 24.

According to the exhaust gas purification system 20 for an internal combustion engine, the internal combustion engine 10, and the exhaust gas purification system S40 for an internal combustion engine described above, when the desulfurization control is executed on the lean NOx trap catalyst device 24, the sulfur accumulation amount Sa in the lean NOx trap catalyst device 24 is calculated in consideration of the degree of desulfurization, that is, whether or not the previous desulfurization control is suspended or interrupted and the desulfurization temperature Tt is set according to the calculated sulfur accumulation amount Sa. Thus, the desulfurization control with superior robustness can be executed in which the desulfurization process can be executed in an ensured fashion while suppressing the lean NOx trap catalyst device 24 from being thermally deteriorated or fused, thereby making it possible to maintain a high NOx purification factor.

### Description of Reference Numerals and Characters

- 10: Engine (Internal combustion engine)
- 11: Fuel injection device
- 15: Exhaust passage
- 20: Exhaust gas purification system
- 21: Exhaust gas purification device
- 22: Diesel oxidation catalyst (DOC) device
- 23: Catalyzed soot filter device
- 24: Lean NOx trap (LNT) catalyst device
- 25: Rear-stage diesel oxidation catalyst (DOC) device
- 26: Fuel injection device
- 31: First temperature sensor
- 32: Second temperature sensor
- 33: Third temperature sensor
- 34: λ sensor
- 35: NOx concentration sensor
- 40: Control unit
- 41: Sulfur occlusion amount calculation means
- 42: Sulfur desulfurization amount calculation means
- 43: Sulfur accumulation amount calculation means
- 44: Desulfurization temperature calculation means
- 45: Desulfurization control execution means
- S41: Sulfur occlusion amount calculation step
- S42: Sulfur desulfurization amount calculation step
- S43: Sulfur accumulation amount calculation step
- S44: Desulfurization temperature calculation step
- S45: Desulfurization control execution step
- A: Fresh air
- G: Generated exhaust gas
- Ga: Exhaust gas passing through exhaust gas purification device
- Gc: Purified exhaust gas
- Ge: EGR gas

## Claims

1. An exhaust gas purification system for an internal combustion engine including a lean NOx trap catalyst device which is provided on an exhaust passage of the internal combustion engine, **characterized in that**
a control unit for controlling the exhaust gas purification system sets a desulfurization temperature so as to correspond to a sulfur accumulation amount in the lean NOx trap catalyst device, the desulfurization temperature being a target temperature in executing a desulfurization control on the lean NOx trap catalyst device.

2. The exhaust gas purification system for the internal combustion engine according to Claim 1, **characterized in that**
the control unit comprises:
sulfur occlusion amount calculation means for calculating a sulfur occlusion amount by adding a sulfur amount that flows into to be occluded in the lean NOx trap catalyst device when the internal combustion engine operates normally;
sulfur desulfurization amount calculation means for calculating a sulfur reduction amount by adding a sulfur amount that is desulfurized from the lean NOx trap catalyst device when the desulfurization control is executed;
sulfur accumulation amount calculation means for calculating the sulfur accumulation amount by subtracting the sulfur reduction amount calculated by the sulfur desulfurization amount calculation means from the sulfur occlusion amount calculated by the sulfur occlusion amount calculation means;
desulfurization temperature calculation means for calculating a desulfurization temperature, when the desulfurization control is executed, from the sulfur accumulation amount calculated by the sulfur accumulation amount calculation means based on a database indicating a relation between the sulfur accumulation amount and the desulfurization temperature which is the target temperature when the desulfurization control is executed; and
desulfurization control execution means for controlling an exhaust gas temperature so as to increase so that the exhaust gas temperature reaches the desulfurization temperature calculated by the desulfurization temperature calculation means.

3. An internal combustion engine comprising the exhaust gas purification system according to Claim 1 or 2.

4. An exhaust gas purification method for an internal combustion engine including a lean NOx trap catalyst device which is provided on an exhaust passage of the internal combustion engine, **characterized in that**
a desulfurization temperature is set so as to correspond to a sulfur accumulation amount in the lean NOx trap catalyst device, the desulfurization temperature being a target temperature in executing a desulfurization control on the lean NOx trap catalyst device.

5. The exhaust gas purification method for the internal combustion engine according to Claim 4, the method comprising:
a sulfur occlusion amount calculation step of calculating a sulfur occlusion amount by adding a sulfur amount that flows into to be occluded in the lean NOx trap catalyst device when the internal combustion engine operates normally;
a sulfur desulfurization amount calculation step of calculating a sulfur reduction amount by adding a sulfur amount that is desulfurized from the lean NOx trap catalyst device when the desulfurization control is executed;
a sulfur accumulation amount calculation step of calculating the sulfur accumulation amount by subtracting the sulfur reduction amount calculated in the sulfur desulfurization amount calculation step from the sulfur occlusion amount calculated in the sulfur occlusion amount calculation step;
a desulfurization temperature calculation step of calculating a desulfurization temperature, when the desulfurization control is executed, from the sulfur accumulation amount calculated in the sulfur accumulation amount calculation step based on a database indicating a relation between the sulfur accumulation amount and the desulfurization temperature which is the target temperature when the desulfurization control is executed; and
a desulfurization control execution step of controlling an exhaust gas temperature so as to increase so that the exhaust gas temperature reaches the desulfurization temperature calculated in the desulfurization temperature calculation step.
